(19) Europäisches Patentamt
European Patent Office
Office européen des brevets

(11) EP 3 358 032 B1

(12) **EUROPEAN PATENT SPECIFICATION**

(45) Date of publication and mention of the grant of the patent:
**04.08.2021 Bulletin 2021/31**

(21) Application number: **16851741.5**

(22) Date of filing: **29.09.2016**

(51) Int Cl.:
***C22C 38/00*** (2006.01) ***B21D 22/20*** (2006.01)
***C21D 1/18*** (2006.01) ***C21D 9/46*** (2006.01)
***C21D 1/26*** (2006.01) ***C21D 8/02*** (2006.01)
***C21D 8/04*** (2006.01) ***C21D 9/48*** (2006.01)
***C21D 1/76*** (2006.01) ***C22C 38/04*** (2006.01)
***C21D 1/84*** (2006.01) ***C25F 1/06*** (2006.01)
***C23G 1/02*** (2006.01) ***B21D 22/02*** (2006.01)
***C22C 38/06*** (2006.01) ***C22C 38/02*** (2006.01)
***C23C 2/02*** (2006.01) ***C23C 2/06*** (2006.01)
***C23G 1/08*** (2006.01) ***B32B 15/01*** (2006.01)

(86) International application number:
**PCT/JP2016/078814**

(87) International publication number:
**WO 2017/057570 (06.04.2017 Gazette 2017/14)**

# (54) GALVANIZED STEEL SHEET FOR HOT PRESSING AND METHOD FOR PRODUCING HOT PRESSED MOLDED ARTICLE

GALVANISIERTES STAHLBLECH FÜR HEISSPRESSEN UND VERFAHREN ZUR HERSTELLUNG EINES HEISSGEPRESSTEN FORMKÖRPERS

TÔLE D'ACIER GALVANISÉ POUR PRESSAGE À CHAUD ET PROCÉDÉ DE PRODUCTION D'UN ARTICLE MOULÉ PRESSÉ À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2015 JP 2015197226**

(43) Date of publication of application:
**08.08.2018 Bulletin 2018/32**

(73) Proprietor: **Kabushiki Kaisha Kobe Seiko Sho (Kobe Steel, Ltd.)**
**Kobe-shi, Hyogo 651-8585 (JP)**

(72) Inventors:
- **OTOMO, Ryosuke**
**Hyogo 675-0137 (JP)**
- **TAKEDA, Mikako**
**Hyogo 651-2271 (JP)**

(74) Representative: **Müller-Boré & Partner Patentanwälte PartG mbB**
**Friedenheimer Brücke 21**
**80639 München (DE)**

(56) References cited:
**WO-A1-2013/047820** **WO-A1-2014/199923**
**WO-A1-2015/005191** **WO-A1-2015/007723**
**WO-A1-2015/033177** **WO-A1-2015/097882**
**WO-A1-2015/146692** **JP-A- 2006 307 261**
**JP-A- 2014 159 624** **JP-A- 2014 224 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 358 032 B1

## Description

Technical Field

The present disclosure relates to a galvanized steel sheet for hot pressing and a method of manufacturing a hot press-formed product.

Background Art

In recent years, in order to reduce weight of automobiles, the application of high-strength steel to their bodies has progressed, and the application of a steel sheet having a tensile strength exceeding 980 MPa has been expanded. However, with increase in the strength of steel sheets, there arise problems such as a reduction in the lifetime of a mold during processing of components, and a large variation in the shape due to spring back.

Thus, a method called hot pressing or hot stamping has been developed, and in particular, this has been put into widespread use as a method of manufacturing a component having a tensile strength 1,470 MPa or more. In the method mentioned above, a low-strength steel sheet is heated to an Ac1 point or higher, for example, about 900°C or higher before press-forming to be austenitized, and then formed in a high-temperature region. As a result, deformation resistance of such a steel can be reduced, spring back can also be reduced, and furthermore, high strength of this steel can be ensured because it is quenched at the same time as molding.

Meanwhile, in automobile structural members, side members, side sills, cross members, pillar lower portions, and the like, which are required to have high corrosion resistance, must have a sacrificial corrosion preventing effect, and thus cold-worked components that use a galvanized steel sheet have been conventionally applied. However, in recent years, even components, such as the side members, mentioned above, are also required to be formed using a galvanized steel sheet in a hot stamp process and to acquire high strength and high corrosion resistance.

Nevertheless, when the galvanized steel sheet is subjected to hot pressing, there are problems that cracks occur in a steel sheet during press-forming due to liquid metal embrittlement (LME), which makes the steel sheet brittle by zinc liquefied at a high temperature of 900°C, thereby reducing the impact resistance and fatigue strength required for the component. The application of a galvanized steel sheet to hot pressing has not progressed at present.

As a method for avoiding this problem, for example, Patent Document 1 discloses formation of a ductile layer on a galvanized coating. Patent Document 1 describes that this ductile layer can disperse tension so well that surface microcracks no longer occur from hardenable steel due to surface oxidation of the strip during heating and/or molding and cooling for austenitization. However, the ductile layer that can be formed by the technique of Patent Document 1 is limited to approximately 10 $\mu$m. When the ductile layer is thin in this manner, it is considered that the ductile layer disappears by rapid alloying of a galvanized coating and a base iron in a heating step before the hot pressing, making it difficult to sufficiently suppress the occurrence of the LME cracks in the hot pressing.

Patent Document 2 discloses a method for performing hot forming using a galvanized steel sheet, comprising the steps of: 1-preparing a steel strip; 2-coating the steel with a layer of zinc or a zinc alloy; 3-heating the coated steel to a temperature between 300°C and an Ac1 temperature of the steel; 4-after the steps 1, 2, and 3, cutting a blank from the steel strip; 5-heating the blank to a temperature exceeding the Ac1 temperature of the steel; 6-hot forming the blank into a component; and 7-hardening the hot-formed component. In the method, it is shown that in step 3 before the hot forming, the steel is heated at 300°C or higher and Ac1 point or lower of a steel material to form a diffusion layer of zinc and iron, thereby reducing the amount of liquid zinc during the hot forming. However, this method is thought to lead to reduction in productivity and an increase in cost, because it requires more complicated and longer heating after a plating treatment than a conventional hot-dip galvanized steel sheet.

The present applicant has also proposed a technique for suppressing LME by heating the steel for a predetermined time or more before hot forming in Patent Document 3. However, there is a need for further studies about enhancing the productivity, such as shortening a holding time in a heating furnace in consideration of the productivity and cost, which are issues for a hot forming process.

In Patent Document 4, in a steel sheet product intended for heat treatment, an individual finish coating is applied to at least one of free surfaces of the steel sheet product. It is shown that the finish coating contains at least one of an oxide compound, a nitride compound, a sulfide compound, a sulfate compound, a carbide compound, a carbonate compound, a fluoride compound, a hydrate compound, a hydroxide compound, and a phosphate compound of base metal. Specifically, a technique is disclosed in which the above-mentioned finish coating is applied to the galvanized surface to enhance a heat absorption capability during heating, so that heating can be performed in a short time. However, this method is thought to make it possible to reach the austenite temperature at which quenching is possible in a short time, but cannot obtain the effect of suppressing LME. Patent Document 5 discloses a galvanized steel sheet with reduced LME cracking.

Prior Art Document

Patent Document

Patent Document 1: JP-T-2011-508824
Patent Document 2: JP-T-2012-512747
Patent Document 3: JP-A-2014-159624
Patent Document 4: JP-T-2014-512457
Patent Document 5: WO 2015/ 005191

Disclosure of the Invention

Problems to be Solved by the Invention

The present disclosure has been made by focusing on the above-mentioned circumstances, and an object thereof is to provide a galvanized steel sheet for hot pressing which can achieve heating for suppressing the occurrence of LME cracks in a short time during a hot pressing process, and a method of manufacturing a hot press-formed product in which the hot pressing is performed by using the above-mentioned galvanized steel sheet. Hereinafter, suppressing the occurrence of LME cracks may be simply referred to as "LME suppression".

Means for Solving the Problems

A galvanized steel sheet according to claim 1.
The present disclosure also includes a method of manufacturing a hot press-formed product obtained by performing hot pressing using the galvanized steel sheet for use in hot pressing.

Effects of the Invention

According to the present disclosure, the heating time for suppressing LME can be reduced during the hot pressing using the galvanized steel sheet. As a result, by using the galvanized steel sheet, hot pressing is performed with higher productivity than in the prior art, so that a hot press-formed product having high strength and high corrosion resistance can be manufactured.

Brief Description of the Drawings

Fig. 1 is a schematic explanatory diagram showing a bending process for LME evaluation in Examples.
Fig. 2 is a diagram showing a collection position of an observation sample from a L-bent material after the bending process in Examples.
Fig. 3 is a diagram for explaining a measurement point of a LME crack depth in Examples.

Mode for Carrying Out the Invention

The inventors have diligently researched to solve the foregoing problems. As a result, it has been found that if the internal oxide (s) is present on the side of the base steel sheet from the interface between the galvanized layer and the base steel sheet in the galvanized steel sheet, preferably, if the internal oxides are dispersed over a certain depth or more from the interface, the heating time for suppressing the LME can be reduced by the hot pressing process using the galvanized steel sheet.
The internal oxide is an oxide containing at least oxidizable elements such as Si, Mn, and Cr. The internal oxide (s) refer to oxide (s) that is present at crystal grain boundaries and within crystal grains in the base steel sheet, and the observation methods are as shown in the following examples.
Although the mechanism of shortening the heating time for suppressing LME by the presence of the internal oxide(s) in the base steel sheet has not been fully elucidated, it is considered as follows. That is, LME is particularly more likely to occur during the hot pressing process when a large amount of liquid zinc is present during processing. By heating before hot pressing, an alloying reaction of zinc and iron occurs between a galvanized layer and a base steel sheet to thereby form an alloy layer that has a high melting point, so that the amount of liquid zinc during processing tends to be reduced, thereby supressing LME. The inventors have found that the alloying reaction is promoted as the internal oxide (s), formed by the presence of internal oxide(s), formed by the selective oxidization of oxidizable elements, such as Si, in the base steel sheet. For this reason, it is presumed that even if the heating before the hot pressing is performed for a short time, the alloy layer is formed, and the amount of liquid zinc is sufficiently reduced, thereby suppressing the occurrence of LME cracks.

It is considered that the above-mentioned alloying reaction is more likely to occur as the internal oxides are dispersed more deeply on the side of the base steel sheet from the interface between the galvanized layer and the base steel sheet, in other words, as a region where the internal oxides are dispersed in the base steel sheet becomes larger. Thus, in the embodiment of the present invention, the maximum depth at which internal oxide (s) is present on the side of the base steel sheet from the interface between the galvanized layer and the base steel sheet is preferably 5 $\mu$m or more. The maximum depth refers to a maximum depth at which internal oxide(s) is present from the interface between the galvanized layer and the base steel sheet in the sheet-thickness cross-sectional direction, as shown by measurements in examples to be mentioned later. In the following, the "maximum depth at which the internal oxide is present" may be simply referred to as the "internal oxidation depth". The internal oxidation depth is more preferably 8 $\mu$m or more, and still more preferably 10 $\mu$m or more. In consideration of manufacturing conditions and the like, the upper limit of the internal oxidation depth is approximately 70 $\mu$m.

The required extent of the LME suppression effect varies depending on molding conditions and a galvanized coating mass according to necessary antirust performance. In any case, however, by using the galvanized steel sheet according to the embodiment of the present invention, the heating time required for suppressing the LME can be reduced, compared to the prior art.

The internal oxidation depth is set according to the galvanized coating mass, thereby making it possible to more certainly exhibit the LME suppression effect. The following formula (2) is satisfied,

$$a \geq 0.30 \times b \cdots (2)$$

where a ($\mu$m) is the maximum depth at which internal oxide (s) is present on the side of the base steel sheet from an interface between the galvanized layer and the base steel sheet, and b (g/m$^2$) is a galvanized coating mass per unit area.

The above-mentioned formula (2) will be described. When the whole galvanized layer of the galvanized steel sheet is alloyed in a heating process during the hot pressing process, the composition of the obtained alloy plating layer has approximately 70% by mass of Fe and 30% by mass of Zn. It was thought that the LME suppression effect could be exhibited to the maximum if the internal oxide (s) was present in the base steel sheet to a depth corresponding to the iron content in the base steel sheet, which was required for alloying the galvanized layer until this state. The depth a ($\mu$m) is a = 0.3 $\times$ b with respect to the coating mass b (g/m$^2$) per unit area of zinc. This is because the Zn content, which is 7:3 in mass ratio with respect to the Fe layer having a thickness of a ($\mu$m), corresponds to b = (3.3 $\times$ a) (g/m$^2$). The above formula (2) is based on such a concept. For example, when the galvanized coating mass per unit area is 80 (g/m$^2$) which exhibits sufficient antirust performance as a general automotive component, the internal oxidation depth at which LME can be suppressed to the maximum is 24 $\mu$m. The internal oxidation depth "a" needs to be 0.30 $\times$ b or more, and the upper limit thereof is not particularly limited, but even if the internal oxidation depth is sufficiently deeper than 0.30 $\times$ b, the LME suppression effect is saturated.

To form the internal oxide, it is necessary for the base steel sheet in the galvanized steel sheet to satisfy the chemical composition shown below, in particular, the defined formula (1). In the manufacturing conditions of the galvanized steel sheet, it is recommended to control winding conditions after hot rolling and the like as mentioned later.

Chemical Composition of Base Steel Sheet

First, the chemical composition of the base steel sheet in the galvanized steel sheet will be described. Hereinafter, "%" in the chemical composition means "% by mass".

C: 0.15 to 0.5%

C is an element that contributes as a solid-solution strengthening element to strengthening of a steel sheet after hot pressing, that is, a hot press-formed product. The lower limit of C content is 0.15% or more in order to obtain high strength of desired 980 MPa or more by hot pressing. The lower limit of C content is preferably 0.17% or more. However, any excessive C content reduces weldability of the hot press-formed product. Thus, the upper limit is 0.5% or less. The upper limit of C content is preferably 0.40% or less, more preferably 0.35% or less, and still more preferably 0.30% or less.

Si: 0.50 to 2.5%

Si is an element that contributes to the improvement of bonding strength of a spot welded part of the hot press-formed product. Si also has an effect of preventing tempering in the slow cooling step of the hot pressing and maintaining the strength of a hot press-formed product. Further, Si is an element that contributes to the improvement of ductility of a component by forming residual austenite. To effectively exhibit these effects, the lower limit of Si content is 0.50% or more. The lower limit of Si content is preferably 0.70% or more, more preferably 0.80% or more, still more preferably 0.90% or more, and yet preferably 1.0% or more. However, any excessive Si content makes the strength of steel extremely high, leading to an increase in rolling load during manufacturing of the base steel sheet, i.e., the hot-rolled pickled steel sheet or the cold-rolled steel sheet. Further, during the hot rolling, scales containing $SiO_2$ are generated on the surface of the base steel sheet, and the surface texture of the steel sheet after plating deteriorates. Thus, the upper limit of Si content is 2.5% or less. The upper limit of Si content is preferably 2.3% or less, and more preferably 2.1% or less.

Mn: 1.0 to 3%

Mn is an element useful for enhancing hardenability and suppressing variations in strength of the hot press-formed products with a high strength. Further, Mn is also an element that promotes alloying in an alloying process of plating mentioned later and contributes to securing Fe concentration in a plating layer. To effectively exhibit these effects, the lower limit of Mn content is 1.0% or more. The lower limit of Mn content is preferably 1.2% or more, more preferably 1.5% or more, and still more preferably 1.7% or more. Meanwhile, any excessive Mn content makes the strength of steel extremely high, leading to an increase in rolling load during manufacturing of the base steel sheet. Thus, the upper limit of Mn content is 3% or less. The upper limit of Mn content is preferably 2.8% or less and more preferably 2.5% or less.

Cr: 0 to 1.0%

The hardenability of the hot press-formed product can be ensured by containing C and Mn in the above-mentioned amounts, but Cr may be contained to further improve the hardenability. In addition, Cr is an element that can be expected to reduce variations in hardness of the hot press-formed product. To effectively exhibit these effects, the lower limit of Cr content is preferably 0.01% or more. The lower limit of Cr content is more preferably 0.05% or more, and still more preferably 0.10% or more. However, any excessive Cr content saturates the above-mentioned effects and leads to an increase in cost. Thus, the upper limit of Cr content is 1.0% or less. The upper limit of Cr content is preferably 0.5% or less and more preferably 0.3% or less.

Si, Mn, and Cr are contained to improve the mechanical properties and hardenability of the steel material. However, as mentioned above, these elements are those that are more oxidizable than iron, and tend to be oxidized even in an environment in which the partial pressure of oxygen is low to reduce an iron oxide. That is, these elements are elements contributing to the formation of the internal oxide(s), mentioned above. In the embodiment of the present invention, to obtain the above-mentioned internal oxide(s), the respective contents of Si, Mn, and Cr in the base steel sheet satisfy the following formula (1).

The left side value of the following equation (1) may be referred to as an X value hereinafter.

$$(2 \times [Si]/28.1 + [Mn]/54.9 + 1.5 \times [Cr]/52.0) \geq 0.05 \quad \cdots \quad (1)$$

In the above formula (1), [Si] represents a Si content in mass% of the base steel sheet, [Mn] represents a Mn content in mass% of the base steel sheet, and [Cr] represents Cr content in mass% of the base steel sheet.

The X value is preferably 0.06 or more and more preferably 0.08 or more. From the viewpoint of toughness of the material, the upper limit of the X value is approximately 0.24.

The components of the steel sheet in the embodiment of the present invention are as mentioned above, and the balance includes iron and inevitable impurities, such as P, S and N. The above-mentioned P, S and N are restrained to the following ranges.

P is an element that adversely affects the bonding strength of a spot welded part, and if the P content is excessive, P is segregated on a final solidified surface of the nugget formed by the spot welding to thereby make the nugget brittle, thus reducing the bonding strength. Therefore, the P content is 0.020% or less and more preferably 0.015% or less.

As with P, S is an element that adversely affects the bonding strength of a spot welded part, and if the S content is excessive, grain boundary fracture due to grain boundary segregation in the nuggets is promoted to reduce the bonding strength. Therefore, the S content is 0.010% or less, and more preferably 0.008% or less.

N combines with B to reduce the content of solid-solution B and to adversely affect hardenability. Any excessive N content increases a precipitation amount of nitrides increases, which adversely affects the toughness. Therefore, the upper limit of N content is 0.010% or less and more preferably 0.008% or less. Considering the cost and the like of steel manufacturing, the N content is usually 0.001% or more.

In addition to the above elements, selected elements mentioned below may be further contained in an appropriate amount as necessary.

Al: 0.01 0.5% or less

Al is an element that can be used for deoxidation, and 0.01% or more of Al may be contained. However, any excessive Al content not only saturates the above-mentioned effect, but also deteriorates the processability as the inclusions such as alumina are increased. Thus, the upper limit of Al content is preferably 0.5% or less. The upper limit of Al content is more preferably 0.3% or less.

One or more elements selected from the group consisting of B: 0.0003% to 0.0050% or less, Ti: 0.01% to 0.10% or less, and Mo: 0.01% to 1% or less B, Ti, and Mo are elements that improve the hardenability of the steel sheet. These elements may be used alone or in combination. Each element will be described below.

To improve the hardenability of the steel sheet by B, the B content is 0.0003% or more. The B content is more preferably 0.0005% or more, and still more preferably 0.0010% or more. Meanwhile, when the B content exceeds 0.0050%, the toughness of the press-formed product deteriorates as coarse boride precipitates in the hot press-formed product, and thus the B content is preferably 0.0050% or less, and more preferably 0.0040% or less.

Ti is an element that fixes N to have a role of securing a quenching effect by B. Further, Ti also has an effect of refining the microstructure of the steel. The refinement of the microstructure improves the ductility of the component. To sufficiently exhibit such an effect, the Ti content is 0.01% or more, and more preferably 0.02% or more. However, any excessive Ti content deteriorates the ductility of the steel sheet, and thus the Ti content is preferably 0.10% or less, and more preferably 0.07% or less.

Mo is an element that is effective in improving the hardenability of the base steel sheet, and can be expected to reduce variations in hardness of the hot press-formed product. To effectively exhibit such an effect, the Mo content is 0.01% or more. The Mo content is more preferably 0.05% or more, and much more preferably 0.10% or more. However, any excessive Mo content saturates the above-mentioned effect, leading to an increase in cost, so that the upper limit of Mo content is preferably 1% or less. The Mo content is more preferably 0.5% or less, and still more preferably 0.3% or less.

One or more elements selected from the group consisting of Nb, Zr and V: 0.01% to 0.10% or less in total Nb, Zr, and V have the effect of refining the microstructure and have the effect of improving the ductility of a component by the refinement of the microstructure. These elements may be used alone or in combination. To effectively exhibit such an effect, the lower limit of the total content of these elements is 0.01% or more, and more preferably 0.02% or more. The total content is a content of a single element when any one of them is used alone, or a total content of two or more types of elements when two or more of them are used in combination. However, any excessive total content of these elements saturates these effects, leading to an increase in cost. Thus, the upper limit of the total content is preferably 0.10% or less and more preferably 0.05% or less.

One or more elements selected from the group consisting of Cu and Ni: 0.01% to 1% or less in total Cu and Ni are elements added as necessary when delayed fracture resistance is imparted to the hot press-formed product. These elements may be added alone, or two types may be used in combination. To effectively exhibit these effects, the total content of these elements is 0.01% or more and more preferably 0.05% or more. The total content is a content of a single element when one of them is used alone, or a total content of two types of elements when they are used in combination. However, any excessive total content causes surface flaws during manufacturing of the steel sheet, and thus the upper limit is preferably 1% or less, and more preferably 0.5% or less.

Method of manufacturing Galvanized Steel Sheet

A galvanized steel sheet according to the embodiment of the present invention can be manufactured by performing casting, heating, hot rolling, heat treatment as necessary, pickling, cold rolling as necessary, a galvanizing treatment, and an alloying treatment as necessary, on the steel that satisfies the above chemical component. Annealing may be performed before the galvanizing treatment. To obtain the above microstructure defined in the embodiment of the present invention, it is particularly recommended to appropriately control at least one of a winding condition after the hot rolling and a heat treatment condition when the heat treatment is performed after the hot rolling, and a pickling condition, as mentioned below.

First, a steel satisfying the above-mentioned chemical composition is cast. Although heating is performed before hot rolling, the heating condition is not particularly limited, and the heating condition normally used can be selected as appropriate. The heating is preferably performed at a temperature of 1,100 to 1,300°C.

Next, hot rolling is performed. The hot rolling condition is not particularly limited, and a normally used condition, such as a temperature during rolling, of about 850 to 1,200°C, can be suitably selected. However, after completion of the hot rolling, in particular, the temperature history after winding needs to be controlled as mentioned in detail below. The preferable upper limit of the thickness of the hot-rolled steel sheet obtained is 3.5 mm or less. The sheet thickness is preferably 3.0 mm or less, and more preferably 2.5 mm or less, and the lower limit of the sheet thickness is 0.8 mm.

To form a state in which oxides of oxidizable elements, such as Si, Mn, and Cr, are dispersed to a sufficient depth on the surface of the steel sheet, the surface of the steel sheet of the entire coil must be held for a long time in a state under non-oxidizing atmosphere at a sufficiently high temperature where no iron scale grows for a period of time from after winding until the start of the plating treatment. In this way, the steel sheet is held for a long time in the state under non-oxidizing atmosphere and at a sufficiently high temperature, so that the internal oxide(s) can be formed deeply in the base steel sheet, thereby making it possible to sufficiently improve the LME suppression effect.

The coil after winding is usually cooled in the atmosphere. An outermost peripheral part of the coil exposed to the outside air is not used because internal oxide(s) is less likely to be formed there, and the inside of the coil which is not exposed to the outside air need only to be used. In order to "hold the steel sheet at a sufficiently high temperature for a long time" after the hot rolling, specifically, it is desirable to hold the steel sheet at about 500°C or higher for 2 hours or more over the entire coil. Means for doing so include at least one of (i) setting a winding temperature higher in winding after hot rolling; (ii) adopting means for relatively reducing a cooling rate after winding; and (iii) further applying a heat treatment after winding and cooling.

In the case of (i) where the winding temperature is set high, the winding temperature is preferably 550°C or higher, and more preferably 650°C or higher. Even if the winding temperature is too high, it will take time to cool, and thus the upper limit of the winding temperature is about 750°C. or lower. In the case of (ii), the means for relatively reducing a cooling rate after the winding include, for example, increasing the size of the coil, keeping the heat by using a thermal insulating material, and the like.

In the case of (iii) as a more specific method, the steel is wound on general conditions, for example, the steel is wound at 650°C or lower and exposed to the outside air to be cooled. After that, a heat treatment or the like is performed by storing the coil-shaped wound steel in a furniture at 500°C or higher for two hours. Specifically, the heat treatment temperature is preferably 500°C or higher as mentioned above, more preferably 600°C or higher, and still more preferably 700°C or higher. However, even if the heat treatment temperature is too high, the steel microstructure is austenitized to change the internal oxidation form, failing to obtain a sufficient LME suppression effect. Thus, the upper limit of the heat treatment temperature is preferably 750°C or lower. The heat treatment time is preferably 2.0 hours or more, and more preferably 2.5 hours or more. However, if the heat treatment time is too long, the productivity deteriorates. Thus, the upper limit of the heat treatment time is preferably set at 6 hours or less.

Then, pickling and cold rolling as necessary are performed. The purpose of pickling is to remove iron scales formed during hot rolling, i.e., the high-temperature oxide film of iron. In a pickling step, pickling is performed for 5 to 300 seconds using hydrochloric acid or the like having a concentration of 5 to 20% and heated to 70 to 90°C as an acid solution. At this time, it is preferable to add an appropriate amount of pickling promoting agent, such as a compound having a mercapto group, and/or an inhibitor, such as an amine-based organic compound to the hydrochloric acid. The cold rolling is performed when the accuracy of the plate thickness needs to be improved. The cold rolling rate is preferably controlled within a range of approximately 20 to 70% in consideration of the productivity at factories and the like. The preferable upper limit of the thickness of the cold-rolled steel sheet thus obtained is 2.5 mm or less. It is more preferably 2.0 mm or less, and still more preferably 1.8 mm or less.

In the pickling step, part of the internal oxide (s) formed after the winding might be damaged, and thus, the pickling is desirably performed in a short time. The pickling time is preferably 40 seconds or less, more preferably 30 seconds or less, and still more preferably 20 seconds or less, depending on the extent of the high-temperature oxide film formed, an acid type, a concentration and a liquid temperature of an acid liquid to be used, and the like.

In addition, in the cold rolling, the internal oxidation depth is also reduced according to the reduction rate and becomes thinner. Therefore, it is recommended to deepen the internal oxidation depth by setting the temperature history after the winding to a high temperature for a long time or the like so that a desired internal oxidation depth can be obtained after the pickling and the cold rolling by taking into account the extent of attenuation of the internal oxidation depth during the pickling step and the cold rolling in advance.

As mentioned above, the internal oxidation depth is preferably set at a depth corresponding to the galvanized coating mass, which is a target level of a product, so that the alloy layer of the base steel sheet and zinc of the plating layer formed by the plating treatment mentioned below is sufficiently formed, thus making it possible to exhibit the LME suppression effect to the maximum.

The galvanized steel sheet according to the embodiment of the present invention is obtained by plating a hot-rolled steel sheet or a cold-rolled steel sheet, which is an original sheet. As a plating method, hot-dip galvanizing or electroplating can be used. Furthermore, after the plating treatment, an alloyed galvanized steel sheet in which the plating layer and the iron of the base metal steel sheet are alloyed may be used by heating at 470 to 580°C for approximately 20 seconds to approximately 10 minutes. The galvanized coating mass per unit area may be determined according to the antirust performance required by a component. The corrosion resistance can be exhibited by setting the galvanized coating mass per unit area to 30 to 200 g/$m^2$. Hereinafter, the "galvanized coating mass per unit area" may be simply referred to as a "galvanized coating mass". The plating layer of the component obtained by hot pressing tends to have a slightly lower corrosion resistance than before hot pressing due to the alloying reaction between the plating layer and the base steel sheet. Therefore, in the plating treatment step, the galvanized coating mass is desirably an amount set by taking into consideration the above-mentioned reduction in accordance with the antirust performance required by an applied portion.

When the continuous hot-dip galvanizing treatment is performed as the plating treatment, the steel sheet is usually annealed before the plating treatment. The purpose of annealing is to secure the wettability between the plating and the steel sheet by reducing a natural oxide film on the outermost surface in the case of a steel sheet for hot pressing. Normally, a steel sheet containing Si has unsatisfactory plating wettability even after annealed, but if internal oxide(s) is formed before the plating treatment as mentioned above, the wettability becomes good, and thus general conditions can be employed as the annealing conditions. As the annealing conditions, for example, a reached temperature is maintained at 600 to 920°C for approximately 20 to 300 seconds in a reducing atmosphere. Thereafter, the steel sheet can be cooled to a temperature close to the temperature of a galvanizing bath, for example, a temperature range of 420 to 500°C, and then the plating treatment can be performed thereon.

Hot Pressing Conditions

The above-mentioned galvanized steel sheet is used and hot-pressed to obtain a hot press-formed product. In obtaining the hot press-formed product, the conditions of the hot pressing are not limited, and the conditions normally used can be adopted therefor. The hot pressing process includes a heating step, a pressing step, and a cooling step. In order to obtain steel components having toughness or the like, it is preferable to adopt the following conditions in each step.

Heating Step in Hot Pressing Process

In the heating step, a galvanized steel sheet is heated. The heating temperature is preferably the Ac1 point or higher, more preferably {Ac1 point + (Ac3 point - Ac1 point) /4 } °C or higher, much more preferably {Ac1 point + (Ac3 point - Ac1 point) / 2 } °C or higher, and still more preferably {Ac1 point + (Ac3 point-Acl point) × 3/4 } °C or higher. The upper limit of the heating temperature is preferably (Ac3 point + 180) °C or lower, and more preferably (Ac3 point + 150) °C or lower. By limiting the heating temperature, coarsening of the microstructure constituting a steel component can be suppressed, and the ductility and bendability of the steel can be enhanced.

The Ac1 point, the Ac3 point, and an Ms point mentioned below can be calculated from the following formulas (1), (2), and (3), respectively, mentioned in "Resley Steel Material Chemistry" (published by Maruzen Co., Ltd., May 31, 1985, page 273). In the following formulas (1) to (3), [ ] indicates the content (in mass%) of each element in the steel sheet, and the content of the element not included in the steel sheet may be calculated as 0% by mass.

$$\text{Ac1 point (°C)} = 723 - 10.7 \times [Mn] - 16.9 \times [Ni] + 29.1 \times [Si] + 16.9 \times [Cr] \cdots (1)$$

$$\text{Ac3 point (°C)} = 910 - 203 \times ([C]0.5) - 15.2 \times [Ni] + 44.7 \times [Si] + 31.5 \times [Mo] - 30 \times [Mn] - 11 \times [Cr] - 20 \times [Cu] + 700 \times [P] + 400 \times [Al] + 400 \times [Ti] \cdots (2)$$

$$\text{Ms point (°C)} = 561 - 474 \times [C] - 33 \times [Mn] - 17 \times [Ni] - 17 \times [Cr] - 21 \times [Mo] \cdots (3)$$

In the heating step, the temperature of the steel sheet does not need to be measured constantly, and as long as the temperature of the steel sheet is measured in a preliminary experiment, and the conditions necessary for temperature control are controlled, it is not necessary to measure the temperature in manufacturing the product. The rate of temperature rise, up to the maximum temperature during heating is not particularly limited. As a method of heating, furnace heating, energizing heating, induction heating, or the like can be employed.

After the temperature of the steel sheet reaches the above-mentioned heating temperature, a holding time at the heating temperature is set to a time during which at least LME cracks can be suppressed, as shown in the following examples. According to the present disclosure, the holding time at the heating temperature can be reduced, as compared with the case of using a conventional galvanized steel sheet. Meanwhile, the upper limit of holding time is preferably 30 minutes or less, and more preferably 15 minutes or less from the viewpoint of suppressing the grain growth of austenite and improving the properties of steel components, such as toughness.

The heating atmosphere is not particularly limited as long as the plating is not ignited. Since the formation of an oxide film on a plating surface can suppress ignition, for example, an atmospheric atmosphere is preferable as the heating atmosphere; however, an oxidizing atmosphere and a reducing atmosphere may be used as long as the plating surface is covered with an oxide film.

Pressing Step in Hot Pressing Process

In the pressing step, the steel sheet heated in the heating step is subjected to pressing. The starting temperature of the pressing is not particularly limited. For example, by setting the starting temperature of the pressing to the heating temperature or lower and the Ms point or higher, the pressing can be easily performed, and the load during pressing can be sufficiently reduced. The lower limit of the starting temperature of the pressing is more preferably 450°C or higher and still more preferably 500°C or higher. The upper limit of the starting temperature of the pressing is, for example, 750°C or lower, more preferably 700°C or lower, and still more preferably 650°C or lower.

A forming end temperature may not be particularly limited, but may be the Ms point or higher, or be within a range of the Ms point or lower and (Ms point - 150) °C or higher. The forming end temperature is a condition that can achieve the sufficient hardness required by a component, for example, the tensile strength 1,370 MPa or more.

The hot press-forming may be performed not only once but also a plurality of times continuously after the heating.

Cooling Step in Hot Pressing Process

Cooling of the steel sheet is started immediately after the heating step. The cooling method is not particularly limited, and may include a method of holding the steel sheet in a mold and cooling by the mold; a method of cooling the steel sheet by water, oil, mist, or the like; air cooling; or a combination thereof. The cooling here includes natural cooling.

A cooling rate in the cooling step, mentioned above, is not particularly limited. For example, an average cooling rate in the temperature range from the above-mentioned heating temperature to the Ms point can be set to 2°C/sec or more. The above-mentioned average cooling rate is more preferably 5°C/sec or higher and still more preferably 7°C/sec or higher. The above-mentioned average cooling rate is preferably 70°C/sec or less, more preferably 60°C/sec or less, and still more preferably 50°C/sec or less.

Examples of the hot press-formed products obtained by performing hot pressing using the galvanized steel sheet according to the embodiment of the present invention include hot press-formed products for automobile bodies, such as a side member, a side sill, a cross member, and a pillar lower portion.

Examples

The present disclosure will be more specifically described below by way of Examples, but is not limited to the following Examples. Various modifications can be made to these examples as long as they are adaptable to the above-mentioned and below-mentioned concepts and are included within the technical scope of the present disclosure.

Example 1

In Example 1, the internal oxidation depth was changed, in particular, by changing an acid liquid immersion time in the pickling step performed after the hot rolling, thereby confirming the influence of the internal oxidation depth on the LME suppression effect.

(1) Manufacturing of Samples

After obtaining a slab of steel having the chemical composition shown in Table 1 by smelting and casting, the slab was heated to 1,200°C and then subjected to hot rolling, followed by finish rolling at a finish rolling temperature of 860°C to 920°C. The steel was then wound at a winding temperature of 660°C to 680°C and allowed to cool. In detail, the wound steel was held in a temperature range of 500°C or higher and less than the winding temperature for 2 hours or more, whereby a hot-rolled steel sheet having a thickness of 2.4 mm was obtained.

[Table 1]

| Steel type notation | Composition of base steel sheet* (mass%) | | | | | | | | | | | | | | | | |
|---|---|---|---|---|---|---|---|---|---|---|---|---|---|---|---|---|---|
| | C | Si | Mn | Cr | 2Si/28.1 + Mn/54.9 + 1.5Cr/52.0 | P | S | N | Al | B | Ti | Mo | Nb | Zr | V | Ni | Cu |
| A | 0.20 | 1.15 | 2.05 | 0.00 | 0.12 | 0.007 | 0.002 | 0.004 | 0.03 | - | - | - | - | - | - | - | - |
| B | 0.21 | 1.10 | 1.85 | 0.20 | 0.12 | 0.009 | 0.004 | 0.003 | 0.04 | 0.0030 | - | - | - | - | - | - | - |
| C | 0.18 | 0.61 | 2.00 | 0.00 | 0.08 | 0.010 | 0.005 | 0.004 | 0.03 | 0.0030 | 0.065 | - | - | - | - | - | - |
| D | 0.20 | 2.11 | 1.82 | 0.00 | 0.18 | 0.003 | 0.006 | 0.004 | 0.04 | 0.0045 | - | 0.52 | - | - | - | - | - |
| E | 0.22 | 1.29 | 1.66 | 0.00 | 0.12 | 0.008 | 0.005 | 0.003 | 0.03 | 0.0030 | - | - | 0.05 | - | - | - | - |
| F | 0.26 | 1.18 | 1.25 | 0.00 | 0.11 | 0.009 | 0.003 | 0.004 | 0.03 | 0.0025 | - | - | - | 0.06 | - | - | - |
| G | 0.21 | 1.09 | 1.23 | 0.00 | 0.10 | 0.009 | 0.003 | 0.004 | 0.03 | 0.0025 | - | - | - | - | 0.06 | - | - |
| H | 0.20 | 0.88 | 2.10 | 0.00 | 0.10 | 0.009 | 0.003 | 0.004 | 0.03 | 0.0025 | - | - | - | - | - | 0.25 | - |
| I | 0.21 | 2.30 | 1.24 | 0.00 | 0.19 | 0.009 | 0.003 | 0.004 | 0.03 | 0.0025 | - | - | - | - | - | - | 0.33 |
| J | 0.22 | 0.20 | 1.09 | 0.00 | 0.03 | 0.008 | 0.004 | 0.003 | 0.04 | 0.0030 | - | - | - | - | - | - | - |

*Balance being iron and inevitable impurities, other than P, S, and N.

Steel type J represents a comparative example

The hot-rolled steel sheet was further descaled in a pickling step and then cold-rolled to obtain a cold-rolled steel sheet having a plate thickness of 1.4 mm as an original plate. In the pickling step, a hydrochloric acid having a concentration of 15% at a liquid temperature of 75°C was used as an acid solution, and the immersion time in the acid solution was set to 10 seconds or 30 seconds. In this way, by changing the immersion time in the acid solution, the degree of dissolution in the surface of the steel sheet after scale removal was adjusted, thereby fabricating materials having an internal oxidation depth changed.

Annealing, hot-dip galvanizing treatment, and alloying treatment were sequentially performed on the above-mentioned cold-rolled steel sheet in a continuous line. The annealing, galvanizing treatment, and alloying treatment used an experimental furnace that had a heating and cooling mechanism capable of controlling the atmosphere and a crucible serving as a zinc plating bath. The experimental furnace was capable of performing the plating treatment and the alloying treatment in a consistent process.

Specifically, the temperature of the steel was raised from the room temperature to a soaking temperature of 800°C at an average rate of temperature rise of 8°C/sec, and subsequently, the steel was subjected to soaking for 120 seconds. Then, the steel was cooled from the soaking temperature to 460°C at an average cooling rate of 3°C/sec. Next, plating was performed on the steel sheet in a hot-dip galvanizing bath having an Al concentration of 0.13% by mass, gas wiping was performed to adjust the galvanized coating mass, and then an alloying treatment was performed on the galvanized steel sheet by heating at 550°C for 20 seconds, thereby obtaining a hot-dip galvanized steel sheet. It is noted that the atmosphere during annealing and for a time period from cooling after annealing until plating is in a state where a reducing atmosphere, specifically, a 5% to 18% $H_2$-$N_2$ gas was allowed to flow in order to secure adhesiveness of the plating.

(2) Measurement of galvanized coating mass and Fe concentration in the galvanized layer

The galvanized coating mass and the chemical composition of the galvanized layer, particularly the Fe concentration in the galvanized layer, of the fabricated hot-dip galvanized steel sheet were measured in the following way. That is, the galvanized steel sheet was immersed in a solution in which hexamethylenetetramine was added to 18% hydrochloric acid to dissolve only the galvanized layer, whereby a galvanized coating mass was determined from a change in mass before and after the dissolution. The dissolved solution was analyzed by inductively coupled plasma (ICP) emission spectroscopy and a ICPS-7510 manufactured by Shimadzu Corporation as a device to determine the Fe concentrations in the galvanized layers.

(3) Measurement of Internal Oxidation Depth in Galvanized Steel Sheet

The internal oxidation depth of the galvanized steel sheet was measured by a reflected electron image observed by a cross-sectional scanning electron microscope (SEM) in the vicinity of the surface of the steel sheet. The presence or absence of internal oxide (s) was determined based on the presence or absence of oxide (s) that appeared in a dark color in the field of view of a reflection electron image×1000 times in the grain boundaries and inside grains of the base steel sheet in the region closer to the side of the base steel sheet than the interface between the plating and the base steel sheet. The internal oxidation depth was defined by using an average value of the maximum depths in three fields of view, which average value was determined by measuring the maximum depth from the interface between the plating and the base steel plate to a position where the oxide was observed in each of three fields of view at a magnetization of 1,000 times and averaging these measured maximum depths. When these oxides were subjected to compositional analysis by energy-dispersive X-ray analysis (SEM-EDX), each of Si, Mn, and Cr was detected at a ratio higher than its average content in the steel, in addition to oxygen and Fe present around the oxides.

(4) Evaluation of LME Suppression

(4-1) Hot Pressing

First, heating and bending were performed in the following way by simulating the manufacturing of a hot press-formed product. In detail, each sample was obtained by cutting the hot-dip galvanized steel sheet used into 100 mm×50 mm according to the following material dimensions. The obtained samples were put into an electric oven heated to 900°C in an atmospheric environment. Then, the samples were held in various different in-furnace times and subsequently taken out. These samples were allowed to cool to a press start temperature of 700°C and then subjected to a bending process as shown in Fig. 1 under the following processing conditions. Specifically, as shown in Fig. 1, by moving a bending blade 3 in the directions of white arrows, a blank 4 sandwiched between a pad 1 and a punch 2 was subjected to a bending process as indicated by a black arrow to obtain a test piece simulating a component, that is, an L-bent material 11.

Processing Conditions

Material dimensions: length 100 mm × depth 50 mm
Pad pressure: 5 tons
Clearance, i.e. distance between punch and bending blade: 1.4 mm, which was the same as the sheet thickness.
Bend R (rp): 2.5 mm
Press Starting Temperature: 700°C
Bottom dead center retention time: 10 seconds

(4-2) Measurement of LME Crack Depth

Fig. 2 is a diagram showing a collection position of an observation sample from a L-bent material after the bending process. As shown in Fig. 2, a cross section 13 of a bent part center 12 was cut out from the L-bent material 11 after the bending process so as to be observed, thereby obtaining an observation test piece 14. The observation test piece 14 was embedded in a support base material so that the above-mentioned cross section 13 could be observed, and then it was etched with nital after being polished. Thereafter, the outer side of a bent part in the cross section, that is, the vicinity of a surface layer on the side where tensile stress is generated by the bending, was observed with a field emission-scanning electron microscope (SUPRA35, manufactured by ZEISS). Note that the magnification was 500 times, the field size was 230 μm × 155 μm; and the number of fields of view was 10. Then, a depth of a crack entering a ground iron side from the interface between the plating alloy layer and the steel sheet, that is, a depth of the LME crack was measured. The interface between the plating alloy layer and the steel sheet was subjected to element analysis by the SEM-EDX to define a boundary between a region where Zn was detected and a region where Zn was not detected. The LME crack is not necessarily the deepest at the apex of the bent part, and is often deeper at a part slightly closer to a flat part from the apex in many cases. Thus, the entire area of the bent part in the cross section needs to be observed. Specifically, the entire area of the bent part in the cross section 13 of the observation test piece 14 was observed while moving the field of view. When there was no LME crack, the depth of a LME crack was defined as zero, while when a plurality of LME cracks was generated, the depth of the deepest LME crack was defined as the depth of the deepest LME crack in the cross section 13.

The outline of a method for measuring the LME crack depth (LME depth) of the observation test piece 14 is as follows. As mentioned above, the depth of the LME crack in the cross-section 13 of the bent part center 12 (which is referred to as the "first cross-section 13") was measured. Thereafter, as shown in Fig. 3, the first cross-section 13 was polished to expose a cross-section parallel to the first cross-section 13 (sometimes referred to as a "second cross-section 13A") (see Fig. 3), and the depth of the LME crack in the second cross-section 13A was measured. Subsequently, the second cross-section 13A was polished to expose a cross-section parallel to the second cross-section 13A (sometimes referred to as a "third cross-section 13B"), and the depth of the LME crack in the third cross-section 13B was measured. The amount of polishing in each polishing process was several mm. The polishing and measurement were repeated nine times to measure the depth of the LME crack in each of the first to tenth cross sections. In other words, ten measured values of the LME crack depth were obtained. The largest of the ten measured values, that is, the depth of the LME crack that was deepest among all the measurements, was defined as the "LME depth" in the observation test piece 14.

In other words, after observing the cross-section 13 as the first cross-sectional part (first cross-section), mentioned with reference to Fig. 3, the cross-section 13A parallel to the cross-section 13 and separated from the cross-section 13 by several mm in the direction perpendicular to the bending direction was polished so as to be observable. Then, the cross section 13A was observed in the same manner as the cross section 13, whereby the depth of the LME crack which was the deepest in the cross section 13A as the second cross section part (second cross section) was determined. The same measurement was also performed on the cross-section 13B as the third cross-section part (third cross-section) shown in Fig. 3. In this way, the polishing and observation were repeatedly performed, so that ten cross-sections in total were observed. Then, the depth of the deepest LME crack among ten cross-sections in total was determined as the LME depth.

In Examples, samples having a LME depth of 10 μm or less were rated as pass because the occurrence of LME cracks is suppressed, while samples having a LME depth of more than 10 μm were rated as fail because the occurrence of the LME crack is not suppressed.

The LME crack tends to be suppressed as the heating temperature before hot pressing is increased and/or the heating time before hot pressing is increased. In the present disclosure, whether or not the presence of the internal oxide(s) under the plating layer of the galvanized steel sheet can shorten the heating time at the heating temperature of 900°C for suppressing LME more than the prior art was evaluated as an index of the effect of suppressing the LME. Specifically, a plurality of samples having different heating times, i.e., in-furnace times, were prepared, and the LME depth of each sample was measured. Then, the shortest in-furnace time at which the LME crack was able to achieve the acceptance criterion: LME depth of 10 μm or less was determined. These results are shown in Table 2, which represents comparative examples.

[Table 2]

| Test No. | Material | | | | | LME evaluation after hot forming | |
|---|---|---|---|---|---|---|---|
| | Steel type notation | Pickling time (sec.) | Internal oxide depth (μm) | Galvanized coating mass (g/m²) | Fe concentration in galvanized layer (mass %) | In-fumace time for LME < 10 μm (minute) | Heating-time shortening effect required for suppressing LME (minute) |
| 1 | A | 30 | 0 | 42 | 14 | 7 | |
| 2 | | 10 | 7 | 42 | 16 | 6 | 1 |
| 3 | | 30 | 0 | 84 | 12 | 8 | |
| 4 | | 10 | 7 | 86 | 12 | 7 | 1 |
| 5 | B | 30 | 0 | 77 | 12 | 9 | |
| 6 | | 10 | 9 | 81 | 14 | 8 | 1 |
| 7 | C | 30 | 0 | 75 | 15 | 9 | |
| 8 | | 10 | 9 | 87 | 17 | 8 | 1 |
| 9 | D | 30 | 0 | 82 | 10 | 9 | |
| 10 | | 10 | 7 | 86 | 12 | 8 | 1 |
| 11 | E | 30 | 0 | 80 | 11 | 10 | |
| 12 | | 10 | 10 | 78 | 13 | 9 | 1 |
| 13 | F | 30 | 0 | 77 | 11 | 8 | |
| 14 | | 10 | 10 | 79 | 13 | 7 | 1 |
| 15 | G | 30 | 0 | 77 | 11 | 9 | |
| 16 | | 10 | 9 | 87 | 11 | 8 | 1 |
| 17 | H | 30 | 0 | 84 | 10 | 8 | |
| 18 | | 10 | 10 | 80 | 12 | 7 | 1 |
| 19 | I | 30 | 0 | 87 | 14 | 9 | |
| 20 | | 10 | 9 | 85 | 14 | 8 | 1 |
| 21 | J | 30 | 0 | 66 | 10 | 10 | |
| 22 | | 10 | 0 | 70 | 12 | 10 | 0 |

Table 2 shows the following. In Table 2, two samples with different pickling times were compared with each other. Combinations of samples for comparison were: Test Nos. 1 and 2; Test Nos. 3 and 4; Test Nos. 5 and 6; Test Nos. 7 and 8; Test Nos. 9 and 10; Test Nos. 11 and 12; Test Nos. 13 and 14; Test Nos. 15 and 16; Test Nos. 17 and 18; and Test No. 19 and 20. A difference in the in-furnace time between the two samples compared was mentioned in "heating-time shortening effect required for suppressing LME" of Table 2. The "heating-time shortening effect required for suppressing LME" in Table 2 indicates how short the in-furnace time of the sample with a short pickling time is based on the in-furnace time of the sample with a long pickling time. As is apparent from Table 2, the in-furnace time of a sample having a short pickling time (a sample in which an internal oxide is present) can be shorter than the in-furnace time of a sample having a long pickling time (a sample in which no internal oxide is present). That is, it is understood that the heating time required for suppressing the LME can be reduced by making the pickling time relatively short to cause the internal oxide (s) to be present under the galvanized layer. From the comparison between Test Nos. 21 and 22, particularly the result of Test No. 22, it can be seen that since the used steel J did not satisfy the specific chemical composition, the internal oxidation depth is zero even if the pickling time is reduced, and the heating time for suppressing the LME cannot be reduced.

Example 2

In Example 2, the internal oxidation depth was changed, in particular, by changing a winding temperature after the hot rolling, thereby confirming the influence of the internal oxidation depth on the LME suppression effect.

After obtaining a slab of steel having the chemical composition shown in Table 1 by smelting and casting, the slab was heated to 1,200°C and then subjected to hot rolling, followed by finish rolling at a finish rolling temperature of 860°C to 920°C. The steel was then wound at a winding temperature of 500°C to 730 °C, which was different from Example 1, and allowed to cool for two or more hours, thereby producing a hot-rolled steel sheet having a thickness of 2.4 mm.

The hot-rolled steel sheet was further descaled in a pickling step and then cold-rolled to obtain a cold-rolled steel sheet having a plate thickness of 1.4 mm, which corresponded to the base steel sheet in the galvanized steel sheet. In the pickling step, a hydrochloric acid having a concentration of 15% at a liquid temperature of 75°C was used as an acid solution, and the immersion time in the acid solution was constantly set to 10 seconds.

Annealing and hot-dip galvanizing treatment were sequentially performed on the above-mentioned cold-rolled steel sheet. Some of samples were subjected to the hot-dip galvanizing treatment and further alloying treatment. The annealing, galvanizing treatment, and alloying treatment used an experimental furnace that had a heating and cooling mechanism capable of controlling the atmosphere and a crucible serving as a zinc plating bath. The experimental furnace was capable of performing the plating treatment and the alloying treatment in a consistent process.

Specifically, the temperature of the steel was raised from the room temperature to a soaking temperature of 800°C at an average rate of temperature rise of 8°C/sec, and subsequently, the steel was subjected to soaking for one minute. Then, the steel was cooled from the soaking temperature to 460°C at an average cooling rate of 3°C/sec. Next, plating was performed on the steel sheet in a hot-dip galvanizing bath having an Al concentration of 0.13% by mass, and gas wiping was performed to adjust the galvanized coating mass. Then, some samples were cooled as they are, thereby obtaining galvanized steel sheets. The remaining samples were subjected to the alloying treatment by being heated at 550°C for 20 seconds after the above-mentioned wiping, thereby obtaining a hot-dip galvanized steel sheet. It is noted that the atmosphere during annealing is in a state where a reducing atmosphere, specifically, a 5%$H_2$-$N_2$ gas was allowed to flow in order to secure adhesiveness of the plating, and the alloying treatment was also performed under the same atmosphere. Cooling before plating, which was conducted after annealing, and cooling after plating or after alloying were performed by blowing a $N_2$ gas onto the steel sheet.

Regarding the fabricated galvanized steel sheet, a galvanized coating mass, a Fe concentration of the galvanized layer, and an internal oxidation depth were measured, and the LME suppression effect were evaluated in the same manner as in Example 1. Further, in Table 3, in order to confirm whether the formula (2) defined by the present disclosure is satisfied or not, (internal oxidation depth, a $\mu$m) - 0.3 $\times$ (galvanized coating mass per unit area, b (g/$m^2$)) is obtained, and when this value is 0 or more, this state is evaluated to be preferable because the internal oxide(s) is sufficiently formed with respect to the galvanized coating mass. These results are shown in Table 3.

[Table 3]

| Test No. | Material | | | | | | | LME evaluation after hot forming | |
|---|---|---|---|---|---|---|---|---|---|
| | Steel type notation | Hot-rolling winding temperature (°C) | Internal oxidation depth a (μm) | Alloying treatment | Galvanized coating mass b ($g/m^2$) | Fe concentration in galvanized layer (mass %) | a - 0.3 × b | In-furnace time for LME < 10 μm (minute) | Heating-time shortening effect required for suppressing LME (minute) |
| 1 | A | 505 | 0 | Yes | 43 | 12 | -13 | 7 | |
| 2 | | 656 | 9 | Yes | 43 | 13 | -4 | 6 | 1 |
| 3 | | 723 | 14 | Yes | 45 | 14 | 1 | 5 | 2 |
| 4 | | 502 | 0 | Yes | 80 | 12 | -24 | 8 | |
| 5 | | 654 | 10 | Yes | 75 | 12 | -13 | 7 | 1 |
| 6 | | 721 | 15 | Yes | 81 | 12 | -9 | 7 | 1 |
| 7 | | 507 | 0 | Yes | 107 | 12 | -32 | 9 | |
| 8 | | 642 | 10 | Yes | 108 | 12 | -22 | 8 | 1 |
| 9 | | 728 | 14 | Yes | 118 | 12 | -21 | 8 | 1 |
| 10 | | 504 | 0 | None | 44 | 1 | -13 | 10 | |
| 11 | | 658 | 10 | None | 44 | 1 | -3 | 9 | 1 |
| 12 | | 717 | 16 | None | 44 | 1 | 3 | 8 | 2 |
| 13 | | 504 | 0 | None | 76 | 1 | -23 | 12 | |
| 14 | | 664 | 10 | None | 80 | 1 | -14 | 11 | 1 |
| 15 | | 730 | 14 | None | 90 | 1 | -13 | 11 | 1 |
| 16 | B | 502 | 0 | Yes | 78 | 14 | -23 | 9 | |
| 17 | | 724 | 16 | Yes | 90 | 14 | -11 | 8 | 1 |
| 18 | E | 512 | 0 | Yes | 81 | 13 | -24 | 9 | |
| 19 | | 717 | 15 | Yes | 79 | 15 | -9 | 8 | 1 |
| 20 | F | 508 | 0 | Yes | 79 | 12 | -24 | 9 | |
| 21 | | 721 | 13 | Yes | 81 | 14 | -11 | 8 | 1 |

(continued)

| Test No. | Material | | | | | | | LME evaluation after hot forming | |
|---|---|---|---|---|---|---|---|---|---|
| | Steel type notation | Hot-rolling winding temperature (°C) | Internal oxidation depth a (μm) | Alloying treatment | Galvanized coating mass b (g/m$^2$) | Fe concentration in galvanized layer (mass %) | a - 0.3 × b | In-furnace time for LME < 10 μm (minute) | Heating-time shortening effect required for suppressing LME (minute) |
| 22 | G | 506 | 0 | Yes | 63 | 12 | -19 | 9 | |
| 23 | | 725 | 14 | Yes | 67 | 12 | -6 | 8 | 1 |
| 24 | J | 520 | 0 | Yes | 64 | 11 | -19 | 10 | |
| 25 | | 718 | 0 | Yes | 74 | 11 | -22 | 10 | 0 |

Examples 1, 2, 4-11 and 13-25 represent comparative examples.

Table 3 shows the following. In Table 3, two or three samples with different hot-rolling winding temperatures were compared with each other. Combinations of samples for comparison as groups were: Test Nos. 1 to 3; Test Nos. 4 to 6; Test Nos. 7 to 9; Test Nos. 10 to 12; Test Nos. 13 to 15; Test Nos. 16 and 17; Test Nos. 18 and 19; Test Nos. 20 and 21; and Test Nos. 22 and 23. A difference in the in-furnace time between the two or three samples compared was mentioned in "heating-time shortening effect required for suppressing LME" of Table 3. The "heating-time shortening effect required for suppressing LME" in Table 3 indicates how short the in-furnace time of the sample with a high hot-rolling winding temperature is based on the in-furnace time of the sample with the lowest hot-rolling winding time. As is apparent from Table 3, the in-furnace time of a sample having a high hot-rolling winding temperature (a sample in which internal oxide (s) is present) can be shorter than the in-furnace time of a sample having the lowest hot-rolling winding temperature (a sample in which no internal oxide is present). That is, it is found that by setting the winding temperature after the hot rolling higher to cause the internal oxide (s) to be present under the galvanized layer, in particular, as shown in Test No. 3 among Test Nos. 1 to 3, as well as Test No. 12 among Test Nos. 10 to 12, the heating time for suppressing the LME can be reduced more by causing the relationship between the internal oxidation depth a ($\mu$m) and a galvanized coating mass b (g/$m^2$) to satisfy a specific formula (2). To satisfy the above formula (2), it is recommended that the winding temperature should be set higher.

Further, when comparing between Test Nos. 1 to 3 and Test Nos. 10 to 12, and comparing between Test Nos. 4 to 6 and Test Nos. 13 to 15, each comparison pair having substantially the same steel type and galvanized coating mass, the alloyed hot-dip galvanized steel sheet is found to be more preferable than the hot-dip galvanized steel sheet from the viewpoint of shortening the heating time required for suppressing LME.

It is apparent from the comparison between Test Nos. 24 and 25, particularly the result of Test No. 25, since the used steel J did not satisfy the specific chemical composition, the internal oxidation depth is zero even if the winding temperature is high, and the heating time for suppressing the LME cannot be reduced.

Example 3

In Example 3, the internal oxidation depth was changed, in particular, by changing heat treatment conditions, performed after the hot rolling, thereby confirming the influence of the internal oxidation depth on the LME suppression effect.

After obtaining a slab of steel having the chemical composition shown in Table 1 by smelting and casting, the slab was heated to 1,200°C and then subjected to hot rolling, followed by finish rolling at a finish rolling temperature of 860°C to 920°C. The steel was then wound at a winding temperature of 500°C, that is, a low temperature and allowed to be cooled, thereby producing a hot-rolled steel sheet having a thickness of 2.4 mm.

A part of the hot-rolled steel sheet was cut into three sheets each with 200 mm $\times$ 300 mm sizes, which were then stacked. The stacked steel sheets were introduced into an electric furnace to be subjected to heat treatment at a furnace temperature of 600°C or 700°C for 180 minutes under atmospheric environment. After being taken out from the furnace, the steel sheets were allowed to cool. Among the three stacked steel sheets obtained in this way, only the middle steel sheet, which was subjected to heat treatment while being shielded from the oxygen in the atmosphere, that is, in a non-oxidizing environment, was adopted as a heat-treated sample. This heat-treated sample and a non-heat-treated sample were subjected to pickling. In detail, the sample was immersed into an acid solution using hydrochloric acid, having a concentration of 15% at a liquid temperature of 75°C for 10 seconds, thereby removing an iron scale layer from its surface. After that, after washing and drying, cold rolling was performed to fabricate a cold-rolled steel sheet having a thickness of 1.4 mm.

Annealing and hot-dip galvanizing treatment were sequentially performed in the same way as in Example 2. Some of samples were subjected to the hot-dip galvanizing treatment and further alloying treatment. Using the obtained galvanized steel sheet, the galvanized coating mass thereof, a Fe concentration in the galvanized layer, and the internal oxidation depth were measured, and the LME suppression effect was evaluated in the same manner as in Example 1. Further, (internal oxidation depth, a ($\mu$m)) - 0.3 $\times$ (galvanized coating mass per unit area, b (g/$m^2$)) was determined in the same manner as Example 2. These results are shown in Table 4.

[Table 4]

| Test No. | Material | | | | | | | | LME evaluation after hot forming | |
|---|---|---|---|---|---|---|---|---|---|---|
| | Steel type notation | Heat treatment after hot rolling | | Internal oxidation depth a | Alloying treatment | Galvanized coating mass b | Fe concentration in galvanized layer | a - 0.3 × b | LME evaluation In-furnace time for LME < 10 μm | after hot forming Heating-time shortening effect required for suppressing LME |
| | | Temperature (°C) | Time (minute) | (μm) | | ($g/m^2$) | (mass %) | | (minute) | (minute) |
| 1 | A | None | | 0 | Yes | 39 | 16 | -12 | 7 | |
| 2 | | 600 | 180 | 19 | Yes | 41 | 16 | 7 | 5 | 2 |
| 3 | | 700 | 180 | 31 | Yes | 43 | 16 | 18 | 5 | 2 |
| 4 | | None | | 0 | Yes | 83 | 13 | -25 | 8 | |
| 5 | | 600 | 180 | 22 | Yes | 80 | 13 | -2 | 7 | |
| 6 | | 700 | 180 | 30 | Yes | 84 | 13 | 5 | 6 | 1 |
| 7 | | None | | 0 | Yes | 98 | 11 | -29 | 9 | 2 |
| 8 | | 600 | 180 | 21 | Yes | 104 | | -10 | 8 | |
| 9 | | 700 | 180 | 28 | Yes | 112 | 11 | -6 | 8 | 1 |
| 10 | | None | | 0 | None | 42 | 2 | -13 | 10 | 1 |
| 11 | | 600 | 180 | 18 | None | 42 | | 5 | 8 | |
| 12 | | 700 | 180 | 29 | None | 45 | 2 | 16 | 8 | 2 |
| 13 | | None | | 0 | None | 85 | 2 1 | -26 | 12 | |
| 14 | | 600 | 180 | 20 | None | 89 | 1 | -7 | 11 | 1 |
| 15 | | 700 | 180 | 28 | None | 81 | 1 | 4 | 10 | 2 |
| 16 | B | None | | 0 | Yes | 79 | 12 | -24 | 9 | |
| 17 | | 700 | 180 | 31 | Yes | 83 | 14 | 6 | 7 | 2 |
| 18 | C | None | | 0 | Yes | 81 | 13 | -24 | 9 | |
| 19 | | 700 | 180 | 33 | Yes | 78 | 15 | 10 | 7 | 2 |
| 20 | D | None | | 0 | Yes | 84 | 12 | -25 | 9 | |
| 21 | | 700 | 180 | 30 | Yes | 82 | 12 | 5 | 7 | 2 |

(continued)

| Test No. | Material | | | | | | | | LME evaluation after hot forming | |
|---|---|---|---|---|---|---|---|---|---|---|
| | Steel type notation | Heat treatment after hot rolling | | Internal oxidation depth a (μm) | Alloying treatment | Galvanized coating mass b ($g/m^2$) | Fe concentration in galvanized layer (mass %) | a - 0.3 × b | LME evaluation In-furnace time for LME < 10 μm (minute) | after hot forming Heating-time shortening effect required for suppressing LME (minute) |
| | | Temperature (°C) | Time (minute) | | | | | | | |
| 22 | G | None | | 0 | Yes | 81 | 11 | -24 | 9 | |
| 23 | | 700 | 180 | 28 | Yes | 89 | 11 | 1 | 7 | 2 |
| 24 | H | None | | 0 | Yes | 77 | 13 | -23 | 9 | |
| 25 | | 700 | 180 | 28 | Yes | 75 | 15 | 6 | 7 | 2 |
| 26 | I | None | | 0 | Yes | 84 | 9 | -25 | 8 | |
| 27 | | 700 | 180 | 29 | Yes | 92 | 9 | 1 | 6 | 2 |
| 28 | J | None | | 0 | Yes | 66 | 9 | -20 | 9 | |
| 29 | | 700 | 180 | 0 | Yes | 64 | 9 | -19 | 9 | 0 |

Examples 1, 4, 5, 7-10, 13, 14, 16, 18, 20, 22, 24, 26, 28 and 29 represent comparative examples

Table 4 shows the following. In Table 4, two or three samples with different conditions for the heat treatment after hot rolling were compared with each other. Combinations of samples for comparison as groups were: Test Nos. 1 to 3; Test Nos. 4 to 6; Test Nos. 7 to 9; Test Nos. 10 to 12; Test Nos. 13 to 15; Test Nos. 16 and 17; Test Nos. 18 and 19; Test Nos. 20 and 21; Test Nos. 22 and 23; Test Nos. 24 and 25; and Test Nos. 26 and 27. A difference in the in-furnace time between the two or three samples compared was mentioned in "heating-time shortening effect required for suppressing LME" of Table 4. The "heating-time shortening effect required for suppressing LME" in Table 4 indicates how short the in-furnace time of the sample hot-rolled after hot rolling is based on the in-furnace time of the sample without any heat treatment after hot rolling. As is apparent from Table 4, the in-furnace time of a sample subjected to the heat treatment after hot rolling (sample in which internal oxide(s) is present) can be reduced more than the in-furnace time of a sample not subjected to the heat treatment after hot rolling (sample in which internal oxide(s) is not present). That is, it is found that the heating time required for suppressing the LME can be reduced by applying the heat treatment to the steel sheet under a non-oxidizing environment after hot rolling to cause the internal oxide(s) to be present under the galvanized layer. In particular, it is found that the heating time required for suppressing the LME can be reduced more by causing the relationship between the internal oxidation depth a ($\mu$m) and the galvanized coating mass b (g/$m^2$) to satisfy the specific formula (2). To satisfy the above formula (2), it is recommended that the heat treatment after the hot-rolling is performed under a non-oxidizing circumstance and at higher temperature.

Further, when comparing between Test Nos. 1 to 3 and Test Nos. 10 to 12, and comparing between Test Nos. 4 to 6 and Test Nos. 13 to 15, each comparison pair having substantially the same steel type and galvanized coating mass, the alloyed hot-dip galvanized steel sheet is found to be more preferable than the hot-dip galvanized steel sheet from the viewpoint of shortening the heating time required for suppressing LME.

As is apparent from the comparison between Test Nos. 28 and 29, particularly the result of Test No. 29, since the used steel J did not satisfy the specific chemical composition, the internal oxidation depth is zero even after a heat treatment under the recommended conditions, which fails to shorten the heating time for suppressing LME.

This application claims priority based on Japanese Patent Application No. 2015-197226 filed on October 2, 2015.

Description of Reference Numerals

| | |
|---|---|
| 1 | Pad |
| 2 | Punch |
| 3 | Bending blade |
| 4 | Blank |
| 11 | L-bent material |
| 12 | Bent part center of L-bent material |
| 13, 13A, 13B | Cross-section of bent part of L-bent material |
| 14 | Test piece for observation |

## Claims

1. A galvanized steel sheet for use in hot pressing, comprising a galvanized layer and a base steel sheet, wherein internal oxide is present on a side of the base steel sheet from an interface between the galvanized layer and the base steel sheet, the base steel sheet comprising, in mass%,
   C: 0.15 to 0.5%;
   Si: 0.50 to 2.5%;
   Mn: 1.0 to 3%;
   Cr: 0 to 1.0%;
   Al: 0.01% to 0.5%;
   P: 0.020% or less;
   S: 0.010% or less; and
   N: 0.010% or less,
   and optionally
   one or more elements selected from the group consisting of B: 0.0003% to 0.0050%, Ti: 0.01% to 0.10%, and Mo: 0.01% to 1%;
   one or more elements selected from the group consisting of Nb, Zr, and V: 0.01% to 0.10% in total; and
   one or more elements selected from the group consisting of Cu and Ni: 0.01% to 1% in total,

with the balance being iron and inevitable impurities, wherein the base steel sheet satisfies the following formula (1):

$$(2 \times [Si]/28.1 + [Mn]/54.9 + 1.5 \times [Cr]/52.0) \geq 0.05 \cdots (1)$$

wherein, in the formula (1), [Si] represents a Si content in mass% of the base steel sheet, [Mn] represents a Mn content in mass% of the base steel sheet, and [Cr] represents a Cr content in mass% of the base steel sheet;
wherein an internal oxidation depth on the side of the base steel sheet from the interface between the galvanized layer and the base steel sheet is 5 μm or more;
wherein the galvanized steel sheet satisfies the following formula (2):

$$a \geq 0.30 \times b \cdots (2)$$

where a (μm) is the internal oxidation depth on the side of the base steel sheet from the interface between the galvanized layer and the base steel sheet, and b ($g/m^2$) is a coating mass per unit area of the galvanized layer;
wherein the coating mass per unit area of the galvanized layer is from 30 to 200 $g/m^2$;
wherein a sheet thickness is 0.8 mm or more; and
wherein the presence or absence of internal oxide is determined as described in the description.

2. A method of manufacturing a hot press-formed product obtained by performing hot pressing using the galvanized steel sheet for use in hot pressing according to claim 1.

**Patentansprüche**

1. Galvanisiertes Stahlblech zur Verwendung beim Warmpressen, umfassend eine galvanisierte Schicht und ein Basisstahlblech, wobei inneres Oxid auf einer Seite des Basisstahlblechs von einer Grenzfläche zwischen der galvanisierten Schicht und dem Basisstahlblech vorhanden ist, das Basisstahlblech umfassend, in Massen-%,
C: 0,15 bis 0,5%;
Si: 0,50 bis 2,5%;
Mn: 1,0 bis 3%;
Cr: 0 bis 1,0%;
Al: 0,01% bis 0,5%;
P: 0,020% oder weniger;
S: 0,010% oder weniger; und
N: 0,010% oder weniger,
und gegebenenfalls
eines oder mehrere Elemente, ausgewählt aus der Gruppe, bestehend aus B: 0,0003% bis 0,0050%, Ti: 0,01% bis 0,10%, und Mo: 0,01% bis 1%;
eines oder mehrere Elemente, ausgewählt aus der Gruppe, bestehend aus Nb, Zr, und V: 0,01% bis 0,10% insgesamt; und
eines oder mehrere Elemente, ausgewählt aus der Gruppe, bestehend aus Cu und Ni: 0,01% bis 1% insgesamt,
wobei der Rest Eisen und unvermeidbare Verunreinigungen ist, wobei das Basisstahlblech der nachstehenden Formel (1) genügt:

$$(2 \times [Si]/28,1 + [Mn]/54,9 + 1,5 \times [Cr]/52,0) \geq 0,05 \cdots (1)$$

wobei, in der Formel (1), [Si] einen Si-Gehalt des Basisstahlblechs in Massen-% darstellt, [Mn] einen Mn-Gehalt des Basisstahlblechs in Massen-% darstellt, und [Cr] einen Cr-Gehalt des Basisstahlblechs in Massen-% darstellt;
wobei eine innere Oxidationstiefe auf der Seite des Basisstahlblechs von der Grenzfläche zwischen der galvanisierten Schicht und dem Basisstahlblech 5 μm oder mehr beträgt;
wobei das galvanisierte Stahlblech der nachstehenden Formel (2) genügt:

$$a \geq 0,30 \times b \cdots (2)$$

wobei a ($\mu$m) die innere Oxidationstiefe auf der Seite des Basisstahlblechs von der Grenzfläche zwischen der galvanisierten Schicht und dem Basisstahlblech ist, und b (g/$m^2$) eine Beschichtungsmasse pro Flächeneinheit der galvanisierten Schicht ist;
wobei die Beschichtungsmasse pro Flächeneinheit der galvanisierten Schicht von 30 bis 200 g/$m^2$ beträgt;
wobei einen Blechdicke 0,8 mm oder mehr beträgt; und
wobei die Anwesenheit oder Abwesenheit von innerem Oxid wie in der Beschreibung beschrieben bestimmt wird.

**2.** Verfahren der Herstellung eines warmpress-gebildeten Produkts, erhalten durch das Durchführen von Warmpressen unter Verwendung des galvanisierten Stahlblechs zur Verwendung beim Warmpressen nach Anspruch 1.

**Revendications**

**1.** Tôle en acier galvanisé pour utilisation dans un laminage à chaud, comprenant une couche galvanisée et une tôle en acier de base, dans laquelle un oxyde interne est présent sur un côté de la tôle en acier de base à partir d'une interface entre la couche galvanisée et la tôle en acier de base, la tôle en acier de base comprenant, en % en masse,
du C: de 0,15 à 0,5%;
du Si: de 0,50 à 2,5%;
du Mn: de 1,0 à 3%;
du Cr : de 0 à 1,0%;
de l'Al : de 0,01% à 0,5%;
du P: 0,020% ou moins;
du S: 0,010% ou moins; et
du N: 0,010% ou moins,
et éventuellement
un ou plusieurs éléments sélectionnés parmi le groupe consistant en B: de 0,0003% à 0,0050%, en Ti: de 0,01% à 0,10%, et en Mo: de 0,01 à 1%;
un ou plusieurs éléments sélectionnés parmi le groupe consistant en Nb, Zr et V: de 0,01% à 0,10% au total ; et
un ou plusieurs éléments sélectionnés parmi le groupe consistant en Cu et en Ni: de 0,01% à 1% au total,
le reste étant du fer et d'inévitables impuretés, dans laquelle la tôle en acier de base satisfait à la formule suivante (1) :

$$(2 \times [Si]/28,1 + [Mn]/54,9 + 1,5 \times [Cr]/52,0) \geq 0,05 \quad \cdots \quad (1)$$

dans laquelle, dans la formule (1), [Si] représente une teneur en Si en % en masse de la tôle en acier de base, [Mn] représente une teneur en Mn en % en masse de la tôle en acier de base, et [Cr] représente une teneur en Cr en % en masse de la tôle en acier de base ;
dans laquelle une profondeur d'oxydation interne sur le côté de la tôle en acier de base à partir de l'interface entre la couche galvanisée et la tôle en acier de base est de 5 $\mu$m ou plus ;
dans laquelle la tôle en acier galvanisé satisfait à la formule suivante (2) :

$$a \geq 0,30 \times b \quad \cdots \quad (2)$$

où a ($\mu$m) est la profondeur d'oxydation interne sur le côté de la tôle en acier de base à partir de l'interface entre la couche galvanisée et la tôle en acier de base, et b (g/$m^2$) est une masse de revêtement par unité de surface de la couche galvanisée ; dans laquelle la masse de revêtement par unité de surface de la couche galvanisée va de 30 à 200 g/$m^2$ ;
dans laquelle l'épaisseur de tôle est de 0,8 mm ou plus ; et
dans laquelle la présence ou l'absence d'oxyde interne est déterminée comme décrit dans la description.

**2.** Procédé de fabrication d'un produit formé par laminage à chaud obtenu en réalisant un laminage à chaud utilisant la tôle en acier galvanisé pour utilisation dans un laminage à chaud selon la revendication 1.

Fig.1

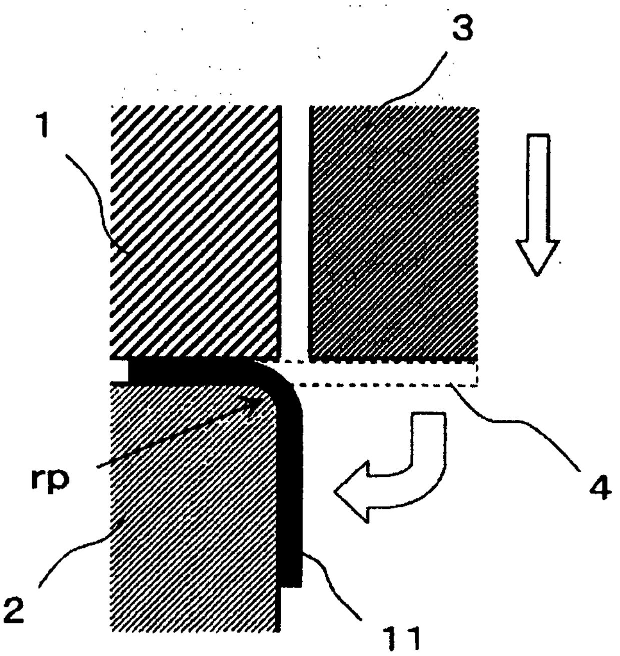


Fig.2

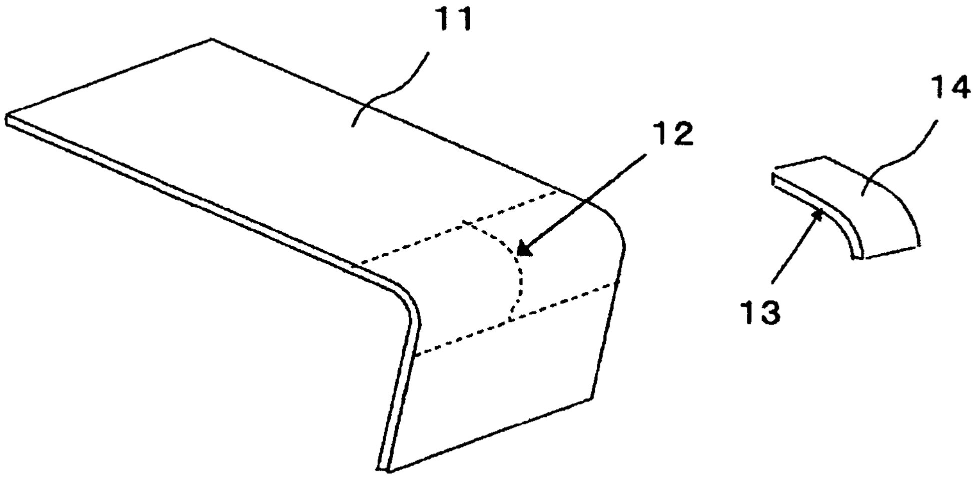

Fig.3

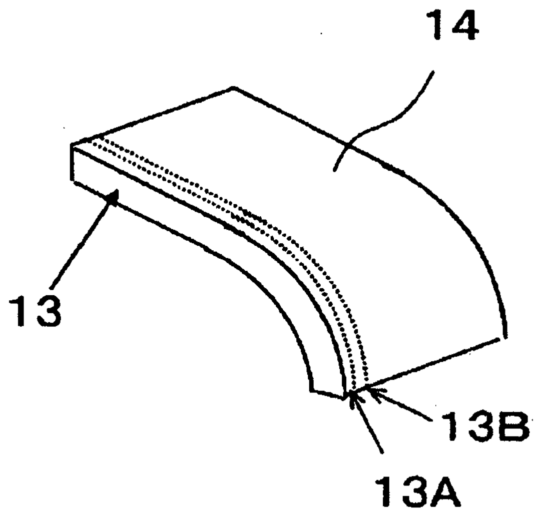

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011508824 T
- JP 2012512747 T
- JP 2014159624 A
- JP 2014512457 T
- WO 2015005191 A
- JP 2015197226 A


### Non-patent literature cited in the description


- Resley Steel Material Chemistry. Maruzen Co., Ltd, 31 May 1985, 273